# EUROPEAN PATENT APPLICATION

(11) **EP 1 426 134 A1**
(43) Date of publication of application: **09.06.2004**
(21) Application number: 02380249.9
(22) Date of filing: 04.12.2002
(51) Int. Cl.: B23K 11/30

(54) **System for measuring and correcting electrode wear in resistance welding guns**

(71) Applicant: Sells Juarez, Anselmo, 08190 Sant Cugat del Valles (ES)
(72) Inventor: Sells Juarez, Anselmo, 08190 Sant Cugat del Valles (ES)
(74) Representative: Ponti Sales, Adelaida

(57) **Abstract**

Said robots (2) move following a series of paths on the workpiece (4) in relation to a preset origin of coordinates. Said system (1) characterised in that it includes means (5 to 13) for measuring electrode wear which convert the measured value into an analog signal, means of system control (17 to 20) which record said analog signal and convert it into a digital signal, and data processing means which calculate the position of the upper edge of the electrode and provide a new value of the origin of coordinates of the robot (2) based on said digital signal, thereby achieving automatic correction of the travel movements of the robot to take account of the measured electrode wear.

## Description

This invention relates to a system for measuring and correcting electrode wear in resistance welding guns, especially in guns mounted on robots, although it could also be applied to floor-mounted guns controlled by robots. The invention also relates to the corresponding method.

Said robots carry out a series of path-following movements in relation to a pre-established origin of coordinates.

### BACKGROUND OF THE INVENTION

In resistance welding applications by means of pneumatic or hydraulic guns operated by robotised manipulation in the automobile industry a number of problems have been observed which are innate to this application and which are described below:
- The wear of the copper electrodes means that the origin of coordinates, known as TCP (Tool Center Point), created originally with the new electrodes, changes over the life of the electrode and causes problems when it come to changing paths, especially if rotations in relation to the TCP axes have to be used.
- The electrode wear has the main effect that the fixed electrode becomes increasingly distant from the workpiece, thereby forcing the dressing system to work excessively and often giving rise to problems in that system.
- The excessive dressing remarked upon in the preceding section means that the force exerted on the workpiece increases and gives rise to deformations and/or poor approaches.
- Often, maximum admissible use of the electrode is not achieved due to problems of dressing and paths, so that much material is wasted.
- When milling the welding capsules the wear produced thereupon gives rise to unnecessary and unequal stresses on the milling blades, thus reducing their average life.
- In the case of X-shaped welding guns, and given that the path followed by the arms is semicircular, as the electrodes wear the geometric centre of milling gradually shifts, causing deformation of the capsule and subsequently of the workpiece.
- Where L-shaped electrodes are used to gain access to narrow zones, the electrode wear gives rise to collisions with the workpieces and results in weld deformations or defects.

### DESCRIPTION OF THE INVENTION

The objective of the system of this invention for measuring and correcting electrode wear in resistance welding guns, especially guns mounted on robots, is to solve the aforesaid disadvantages presented by resistance welding applications, while providing a number of advantages which will be described below.

The system of this invention for measuring and correcting electrode wear in resistance welding guns, especially guns mounted on robots, is characterised in that it includes means for measuring electrode wear which convert the measured value into an analog signal, means of system control which record said analog signal and convert it into a digital signal, and data processing means which calculate the position of the upper edge of the electrode and provide a new value of the origin of coordinates of the robot based on said digital signal, thereby achieving automatic correction of the travel movements of the robot to take account of the measured electrode wear.

Thanks to the system of the invention it is possible to measure simply and effectively the wear that takes place on the copper electrode of the resistance welding gun.

As noted above, this system carries out an automatic correction of the paths followed by the robot in function of measured electrode wear, so that the distance between the electrodes and the workpiece remains constant.

To achieve this the system corrects the origin of coordinates or theoretical TCP of the robot in function of the measured electrode wear.

The use of said system further provides a number of advantages:
- All the problems innate to resistance welding and outlined in the background section are eliminated.
- A lengthening of the average life of the electrodes is achieved, with a 28% reduction of consumption.
- Assurance and improvement of the quality of the weld points is achieved.
- A 98% reduction of rejected workpieces is achieved.
- The production rate is increased by reducing calls for change of electrodes.
- A lengthening of the life of the milling blades and dressing system is achieved.
- Fast amortisation is achieved due to the low cost of the system.
- The fitting of analog boards on the robot is avoided; such boards entail high cost and complicated control by program.
- It is a robust system that suffers from a minimum number of defects.
- It is easy to monitor electrically.
- Assembly, rating and offset of the system are simple.
- The system is small in size and can thus be fitted at any part of the installation.
- Minimum cycle time is used, as the measurement is carried out only when undertaking milling operations and changes of capsule.
- The power supply, wiring and control are independent of the robot, so that the system is isolated from robot power supply and system defects or failures.
- The system has high galvanic insulation.
- Assembly and set-up time is reduced.
- The maintenance expense is minimal; all that needs be done is to lubricate the linear travel guiding means every three months.
- The system has high precision, being capable of measuring wear rates of only 0.2 mm.
- As it is a linear measurement system, no correction equation or algorithm is needed, thereby eliminating adjustments of gain, bottom of scale, resolution, etc.
- All the elements fitted are commercially available and with immediate delivery.
- The measurement is not affected by changes of temperature and/or exterior magnetic interference.
- Consumption is minimal, and the system can withstand power cuts of up to 2 seconds without losing the measurement value.

According to one embodiment of this invention, the means for measuring the wear of the electrode include a feeler device which measures the worn distance of the electrode and a transducer device which converts said physical measurement into an analog signal.

Preferably, the feeler device includes a comparator support movable in accordance with a shifting movement through guiding means, a feeler arm for contact with the electrode attached to one end of said comparator support, abutment means that delimit the travel of the comparator support and elastic means for return thereof.

According to one characteristic of the invention, the comparator support is attached to said transducer device.

The measurement of electrode wear is carried out by positioning the fixed electrode beside the feeler arm and making it travel a certain distance, so that when the comparator support moves attached to the feeler arm it transmits this rectilinear movement to the transducer device, which then converts the magnitude corresponding to the distance travelled into an analog signal.

Preferably, the transducer device is a potentiometer of high-precision resistance and linearity characteristics. The change of position of the potentiometer is translated into a change of voltage.

Additionally, the robot includes an inputs board for connecting with the system.

According to another aspect of the invention, the control means of the system include a voltage regulator unit, an analog-digital converter unit, an oscillator unit and an outputs interface.

Preferably, the analog-digital converter unit includes at least one input connected to the voltage ) regulator unit.

Said voltage regulator unit carries out rectification and filtering of the input signal, permitting a wide range of power-supply voltages.

Advantageously, the analog-digital converter unit includes at least one input for receiving the analog value coming from the transducer device of the measuring means, and at least one output for sending the digital reading obtained to the outputs interface.

Also advantageously, the outputs interface of the control means is connected to the inputs board of the robot.

Preferably, the analog-digital converter unit including a storage or "hold" device for holding the measured value sent by an output on the board of the robot.

Advantageously, said output on the board of the robot resets to zero once the measured value has been sent for holding.

This signal is governed by the aforesaid output on the board of the robot at the time the measurement is made. Once this measured value has been sent to the hold, this output resets to zero and the measurement taken is held for subsequent consultation.

Also advantageously, the oscillator unit sets the oscillation speed of the at least one output of analog-digital converter unit. It therefore adjusts its sampling rate and prevents the accumulation of states prior to the one desired.

Preferably, the outputs interface includes optocouplers for isolating the digital value from the least one output of the analog-digital converter unit.

In accordance with another aspect of the invention, the system includes a support plate for housing the elements which form the measuring means and the control means, and a protective housing attached to said support plate.

Preferably, the support plate is fixed to a stanchion.

In accordance with another characteristic of the invention, the system includes an internal connection which connects the control means with the transducer device of the measuring means.

Preferably, the system includes a plurality of external connections which include the connection with the power-supply voltage, connection with the separate common terminal for activation of the outputs interface of the control means, connection with the at least one digital output of the control means corresponding to the measured value, and connection with the digital input of the control means for holding the measured value.

Advantageously, the external connections are grouped on a single connector.

Thanks to said connector very high leaktightness is achieved, together with exceptional mechanical rigidity and good quality of connection.

Preferably, the system is situated in a zone accessible to the field of work of the robot and close to the electrode milling unit.

The method for measuring and correcting electrode wear in resistance welding guns, especially in guns mounted on robots, applied to the system of the invention described above, is characterised in that it consists in:
a) Bringing the robot towards the feeler arm of the measuring means of the system.
b) Moving the fixed electrode of the gun, in an ascending path, until it is situated beneath the feeler arm.
c) Moving the feeler arm to an intermediate position in order to measure the physical magnitude of the wear of the electrode.
d) Converting said physical measurement into an analog signal by means of the transducer device of the measuring means.
e) Converting said analog signal into a digital signal by means of the analog-digital converter of the control means.
f) Calculating the position of the upper edge of the electrode by means of the data processing means on the basis of the digital value provided.
g) Comparing said position of the upper edge of the electrode with a standard value calculated upon start-up of the robot.
h) Calculating the correction of the position of the preset origin of coordinates of the robot.
i) Obtaining the new value of the origin of coordinates of the robot.
j) Giving the robot the order to implement the welding path using the new value of the origin of coordinates.

Preferably, the measuring and correcting of the wear of the electrode is carried out either at the moment of initial start-up of the robot or after an electrode milling operation or after a change of electrodes.

### BRIEF DESCRIPTION OF THE DRAWINGS

In order to facilitate description of all that is outlined above some drawings are attached which show, schematically and solely by way of non-restrictive example, a practical case of embodiment of the system of the invention for measuring and correcting electrode wear in resistance welding guns, especially in guns mounted on robots, in which:
Figure 1 is a plan view of an installation which uses robots provided with resistance welding guns with copper electrodes, and shows the location of the system of the invention for measuring and correcting electrode wear;
Figure 2 is a plan view of the system of the invention for measuring and correcting electrode wear, in rest position;
Figure 3 is a plan view of the system of Figure 2, in measuring position;
Figure 4 is a front elevation view of the system of Figure 2;
Figure 5 is a side elevation view of the system of Figure 2;
Figure 6 is a block diagram of the control means of the system; and
Figure 7 is a flow diagram of the method of the system.

### DESCRIPTION OF A PREFERRED EMBODIMENT

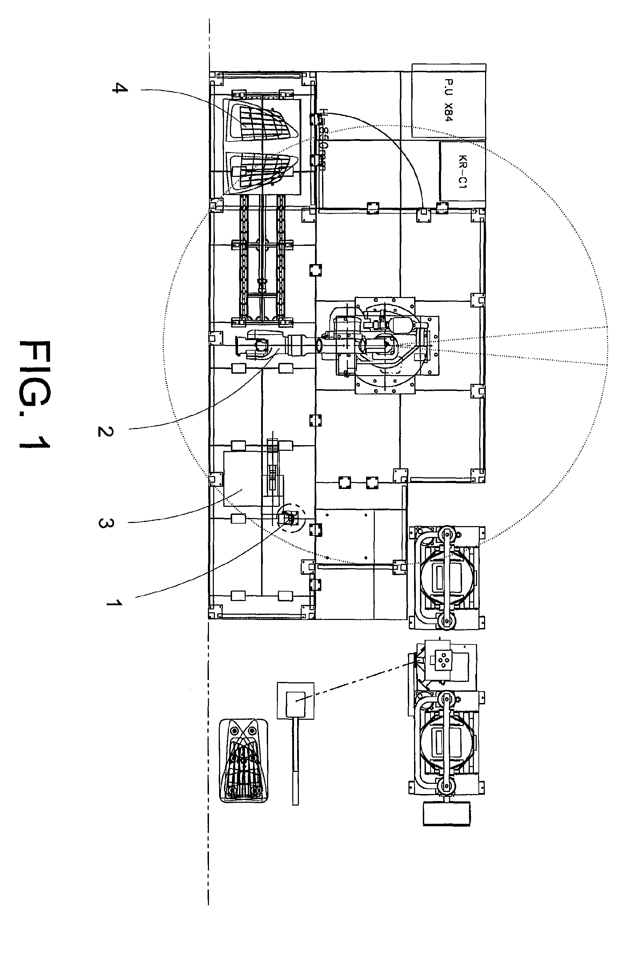

Figure 1 shows the location of the system 1 of the invention for measuring and correcting electrode wear in resistance welding guns, mounted on robots 2.

The robot 2 travels a series of paths on the workpiece 4 in relation to a preset origin of coordinates or TCP.

The system 1 will have to be interconnected only with the robot 2 on which the electrode wear is to be measured and only to it.

The inputs board of the robot 2 will be used to find out the wear value, with at least eight free inputs being necessary.

In the event that the robot 2 is not capable of memorising the wear value of the electrode from one cycle to another, one output of the robot 2 will have to be set up to hold the measurement value once it has been taken.

The system 1 for measuring and correcting electrode wear must be provided at a zone which is accessible to the field of work of the robot 2 and does not interfere with the path of travel of said robot 2. The ideal location is beside the electrode milling system 3, as shown in Figure 1.

The system 1 of the invention includes means for measuring 5 to 13 the wear of the electrode, which means convert said measured value into an analog signal; control means 17 to 20 of the system which record said analog signal and convert it into a digital signal; and data processing means which calculate the position of the upper edge of the electrode and provide a new value of the origin of coordinates of the robot 2 based on said digital signal.

Automatic correction of the paths travelled by the robot 2 is thus obtained in function of the measured electrode wear.

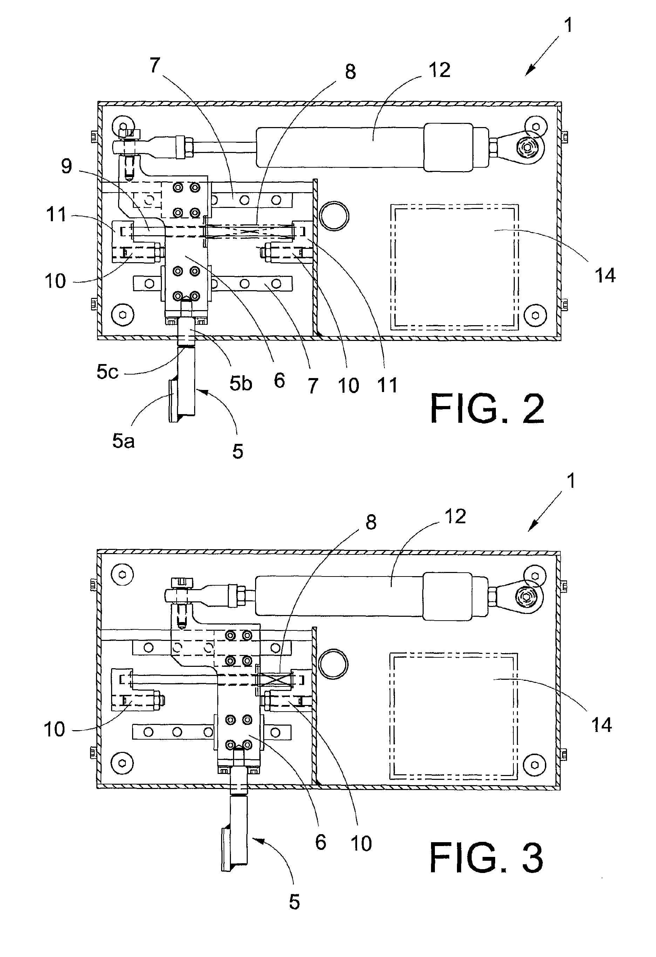

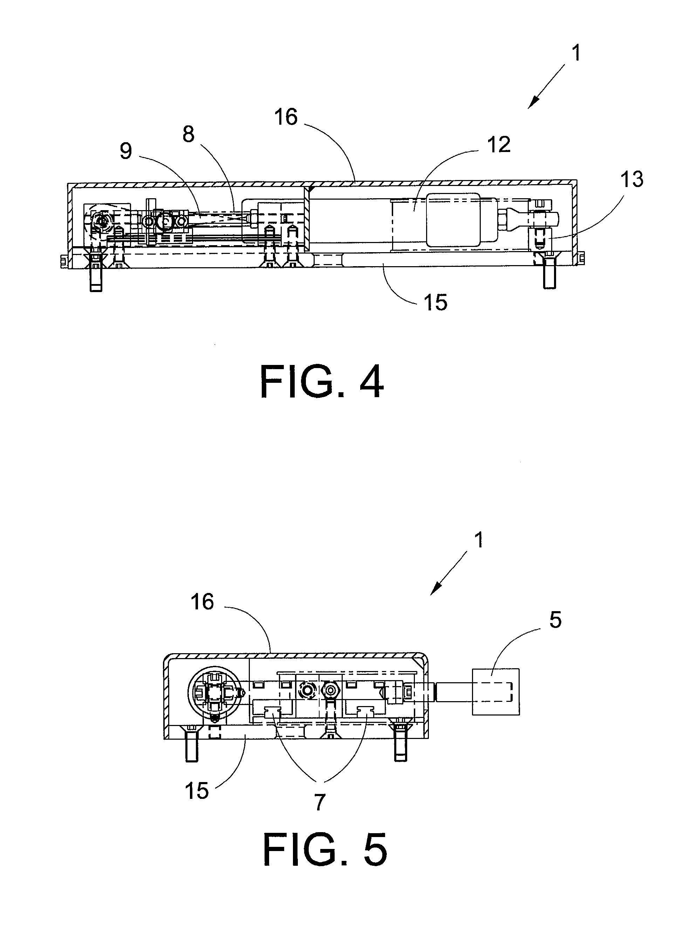

With reference to Figures 2 to 5, the measuring means of wear of the electrode include a feeler arm 5 which makes contact with the electrode and is attached to a comparator support 6, which effects a rectilinear movement along a direction defined by some linear guides 7 of some guiding means.

This system of movement is provided with a spring 8 for automatic return of the comparator support 6 attached to the feeler arm 5 to its rest position. Said spring 8 is housed in a spindle 9, which carries out the function of guiding the spring 8 itself.

The measuring means also include two abutment stops 10 which prevent overtravel of said comparator support 6. The two stops 10 and the spindle 9 are housed in two parts 11 which have an L shape.

Moreover, said comparator support 6 is attached to a potentiometer 12 which has certain characteristics of resistance and linearity and is of high precision. The position change of the potentiometer 12 is converted into a change of voltage between 0 and 10 volts.

The spring 8 permits the spindle of the potentiometer 12 to be extended at all times. Similarly, a rear support 13 is also included to secure the fixed end of the potentiometer 12.

Said comparator 12 is wired directly to an electronic control cabinet 14 which houses the control means 17 to 20 of the system.

All these elements which make up the measuring means 5 to 13 as well as the aforesaid electronic control cabinet 14 are mounted on a support plate 15, which is covered by a housing 16 fixed to it by means of fasteners.

Said support plate 15 is provided with some drillholes, whose function is for assembling all these mechanical and electrical parts of the system onto said plate 15 and also to make it possible to attach the plate to a stanchion.

Said housing 16 permits the mechanical and electrical parts of the system to be protected, by ensuring suitable leaktightness, while it also achieves a better appearance. Furthermore, said housing 16 is provided with access to the moving parts.

The feeler arm 5 is made up of three welded pieces: the first piece 5a is a bakelite plate glued onto the side which the electrode feels, being of low thickness in order to avoid potential drift of the welding gun; the second piece 5b mounted on the other end of the feeler arm 5, is provided with a spindle and with drillholes for adjusting and securing it onto the comparator support 6; and the third piece 5c mounted on the intermediate part of the feeler arm 5, has a notch which functions as a fuse, that it, it tends to break before damage is caused to the system.

The comparator support 6 has on its various sides a number of machined drillholes for attaching said comparator support 6 respectively to the guides 7, the feeler arm 5, knuckle joint of the potentiometer stem 12 and the spindle 9 of the spring 8.

The guiding means include the aforesaid linear guides 7 and a ball-race for each guide. The balls are in contact at four points, which increases their life and improves performance under complex load and high-moment conditions; moreover, said balls are not loose but are under a fine sheet, so that when the race separates from the guide the balls remain in the race.

Each L-shaped piece 11 has various machined drillholes on is faces for attaching the L-shaped piece itself to the support plate 15 by means of bolts, for housing each stop 10 inside it, and for fixing the spindle 9 of the spring 8 in order to prevent the latter from moving longitudinally.

Figures 2 and 3 show the measuring means 5 to 13 in the rest position during measurement of electrode wear, respectively.

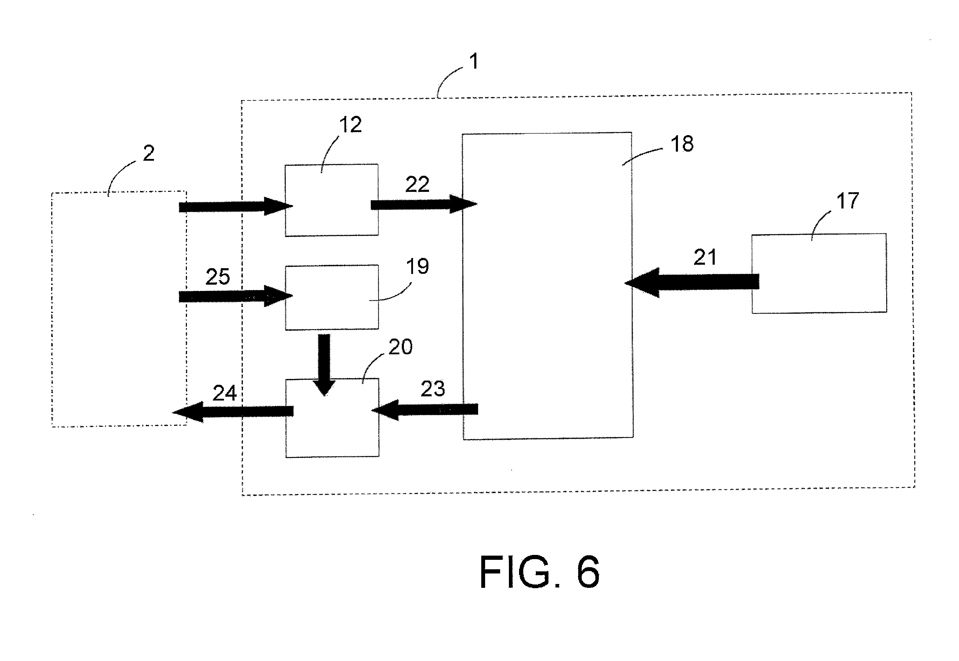

Furthermore, as can be observed in the block diagram shown in Figure 6, the control means of the system include a voltage regulator unit 17, an analog-digital converter unit 18, an oscillator unit 19 and an outputs interface 20.

The voltage regulator unit 17 has a system for rectification and filtering the input signal which permits a wide range of power-supply voltages. It also includes a voltage regulating system, which together with some load capacitors permits micro-power cuts to be withstood without affecting the functioning of the circuit.

The analog-digital converter unit 18 has the function of receiving the analog signal corresponding to the travel of the feeler arm 5 and converting it at the inputs of the robot 2. This is a high-speed, 8-bit analog-digital converter with maximum conversion time of 2.5 microseconds.

Said analog-digital converter unit 18 includes an input 21 connected to the voltage regulator unit 17, an input 22 for receiving the analog value from the potentiometer 12, and eight outputs 23 for sending the digital value obtained to the outputs interface 20.

Once the value has been converted, it is isolated suitably by means of power optocouplers with high commutation speed and high tolerance of voltage variations, and it is then sent to the inputs board 24 of the robot 2.

Said analog-digital converter unit 18 likewise includes a "hold" (locks the reading) which permits the value read to be maintained. This signal is governed by an output 25 of the robot 2 at the time the measurement is taken. Once the value has been sent, said output 25 resets to zero and the measurement taken is held for subsequent consultation.

The oscillator unit 19 permits adjustment of the speed of oscillation of the outputs 23 delivered to the robot 2, adjusting their sampling speed and preventing accumulation of values from states prior to the one desired. This is an Astable oscillator which shows the refresh rate of the outputs 23 applied to the robot 2.

The outputs interface 20 is connected to the inputs board 24 of the robot 2 (eight inputs), and is therefore fitted with a system of potential-free digital outputs.

The system includes an internal connection which connects the control means 17 to 20 to the potentiometer 12. This connection is implemented by means of a connector which provides very considerable leaktightness and exceptional mechanical rigidity, ensuring good quality of connection.

Furthermore, the system is connected with the rest of the automatic installation in the following manner:
- a connection with the power-supply voltage of between 18 and 25 V for internal operation.
- a connection with the separate common terminal for activation of the outputs interface 20 (inputs of the robot) of between 10 to 50 V.
- connection with eight digital outputs 23 corresponding to the measurement taken.
- connection with the digital input 25 used for the system for holding the measurement.

Said connections are grouped on a single connector situated in the lower part of the housing 16. This connector likewise provides very high leaktightness and exceptional mechanical rigidity, while also ensuring a good quality connection.

The data processing means permit the new origin of coordinates or TCP of the robot 2 to be calculated on the basis of the digital signal 23 sent to the inputs board 24 of the robot 2.

Electrode wear measurement is carried out in three cases: upon initial start-up of the robot; after a change of electrodes; or after a milling operation.

Electrode wear can be checked correctly in these three cases, without interfering with installation cycle time.

Wear measurements can nevertheless be made in each working cycle if the cadence so permits.

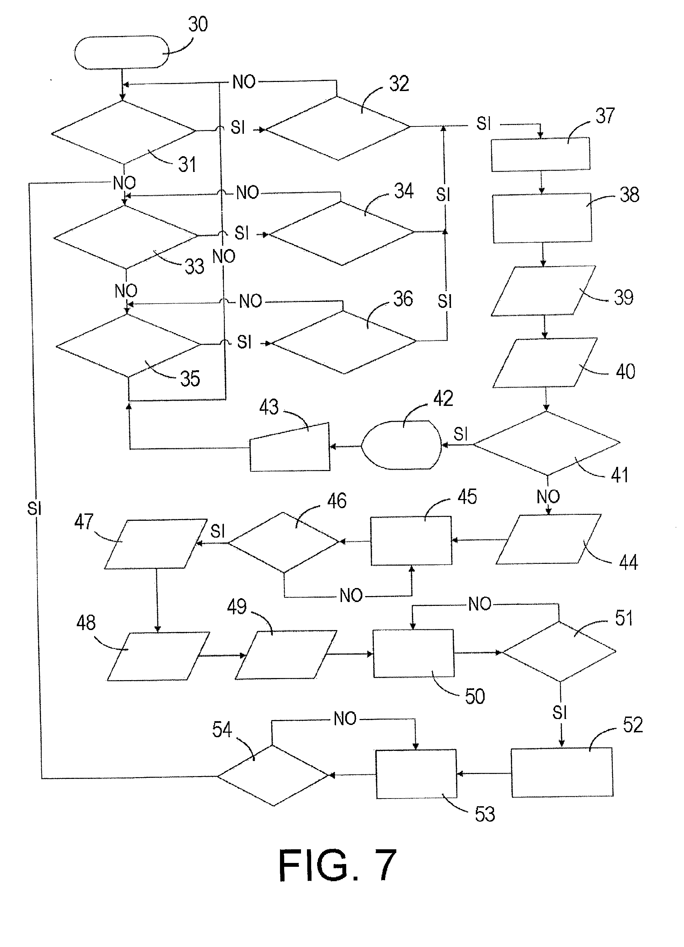

Figure 7 shows the flow diagram corresponding to the process executed by the date processing means of the system. Its various stages are described below:

The start, stage 30, of the method for measuring and correcting electrode wear is carried out by checking if a first start-up of the robot takes place, stage 31; if so, a check is made that the start-up is correct, stage 32; if it is not correct, a further check on it will be made.

If a first start-up of the robot does not take place, a check is made on whether a change of electrodes has been carried out, stage 33; if so, a check is made on whether the change of electrodes has finished, stage 34; if it has not finished, this point is checked again.

If there has been no change of electrodes, a check is made on whether a milling operation has been carried out, stage 35; if so, a check is made on whether the milling operation has been completed, stage 26; if it has not been completed, it is checked again.

If no milling operation has been carried out, a further check is made to find if a first start-up of the robot has taken place, stage 31.

If a correct first start-up has been carried out, or if the change of electrodes has been completed, or if the milling operation has been completed, then a reset of values is implemented, stage 37.

The command for output of the robot which controls the hold of the analog-digital converter 18 is then issued, in which the measured value is stored, stage 38.

A reading is taken of the binary value of said hold, stage 39; and its decimal value is calculated, stage 40.

After this, a check is made on whether that decimal value exceeds five, stage 41.

If said decimal value is greater than five, a message is sent to reset the feeler to zero, stage 42; and by pressing a key, stage 43, the process returns to stage 31.

If said decimal value is less than five then the electrode wear is measured by means of the feeler arm 5. For this purpose the robot 2 must move towards the feeler arm 5; and then the fixed electrode of the gun is moved, following an ascending path, until it is situated beneath the feeler arm 5.

The reference value of the feeler arm 5 (calculation offset) is then loaded, stage 44.

The measurement path of the robot 2 is then executed, stage 45; and a check is made that the robot 2 is at the measuring point, stage 46; if so, the binary value corresponding to the measured value is read, stage 47. If the robot 2 is not at the measuring point the path is executed again.

In order to carry out the wear measurement, said fixed electrode causes the feeler arm 5 to move to an intermediate position in order to measure the physical magnitude of the electrode wear. This movement of the feeler arm 5 is detected by the potentiometer 12, which converts that movement into an analog signal or, more specifically, a change of voltage. The analog signal is then sent to the analog-digital converter 18, which converts it into a digital signal, that is, its binary value is obtained.

There follows calculation of the decimal value, stage 48, corresponding to said binary value. The reference or offset value is then subtracted from it, stage 49, thus yielding the value of measurement of electrode wear.

The rest path of the robot is then executed, stage 50; and a check is made that the robot 2 is at the rest point, stage 51; if so, the movement of the origin of coordinates is obtained, stage 52, taking account of the wear measurement value found; that is, the new origin de coordinates of the robot 2 is obtained. If the robot 2 is not at the rest point, the rest path is executed again.

The working path of the robot is then executed, stage 53. Finally, a check is made to find if the path has been completed, stage 54; is so, another check is made to find if a change of electrodes has been carried out, stage 33; and if the working path has not been completed, it is executed again.

It should be stressed that although a description has been provided of a system for measuring and correcting electrode wear in resistance welding guns, especially in guns mounted on robots, it can also be applied to floor-mounted guns managed by robots. Similarly, this type of system can also be used in fields other than welding, wherever the wish is to find out the position, distance, wear, orientation, etc., of an object or piece to be manipulated by a robot and that permits physical contact with it.

Independent of the object of this invention are the materials used to manufacture the elements making up the system for measuring and correcting electrode wear in resistance welding guns, especially in guns mounted on robots as described, together with the shapes and dimensions thereof and all the accessories details which might be presented, which may be replaced by others that are technically equivalent, as long as they do not affect its essential nature or depart from the sphere defined by the claims attached below.

## Claims

**1.** System (1) for measuring and correcting electrode wear in resistance welding guns, especially in guns mounted on robots (2), with said robots (2) travelling a series of paths on the workpiece (4) in relation to a preset origin of coordinates, **characterised in that** it includes means (5 to 13) for measuring electrode wear which convert the measured value into an analog signal, means of system control (17 to 20) which record said analog signal and convert it into a digital signal, and data processing means which calculate the position of the upper edge of the electrode and provide a new value of the origin of coordinates of the robot (2) based on said digital signal, thereby achieving automatic correction of the travel movements of the robot to take account of the measured electrode wear.

**2.** System (1), as claimed in Claim 1, **characterised in that** the means for measuring the wear of the electrode include a feeler device (5 to 10) which measures the worn distance of the electrode and a transducer device (12) which converts said physical measurement into an analog signal.

**3.** System (1), as claimed in Claim 2, **characterised in that** the feeler device includes a comparator support (6) movable in accordance with a shifting movement through guiding means (7), a feeler arm (5) for contact with the electrode attached to one end of said comparator support (6), abutment means (10) that delimit the travel of the comparator support (6) and elastic means (8, 9) for return thereof.

**4.** System (1), as claimed in Claim 3, **characterised in that** the comparator support (6) is attached to said transducer device (12).

**5.** System (1), as claimed in Claim 2 or 4, **characterised in that** the transducer device (12) is a potentiometer.

**6.** System (1), as claimed in Claim 1, **characterised in that** the robot (2) includes an inputs board (24) for connecting with the system.

**7.** System (1), as claimed in Claim 1, **characterised in that** the control means of the system include a voltage regulator unit (17), an analog-digital converter unit (18), an oscillator unit (19) and an outputs interface (20).

**8.** System (1), as claimed in Claim 7, **characterised in that** the analog-digital converter unit (18) includes at least one input (21) connected to the voltage regulator unit (17).

**9.** System (1), as claimed in Claims 7 or 8, **characterised in that** the analog-digital converter unit (18) includes at least one input (22) for receiving the analog value coming from the transducer device (12) of the measuring means, and at least one output (23) for sending the digital reading obtained to the outputs interface (20).

**10.** System (1), as claimed in Claims 6 to 9, **characterised in that** the outputs interface (20) of the control means is connected to the inputs board (24) of the robot (2).

**11.** System (1), as claimed in Claims 7 to 9, **characterised in that** the analog-digital converter unit (18) includes a storage or "hold" device for holding the measured value sent by an output (25) on the board of the robot (2).

**12.** System (1), as claimed in Claim 11, **characterised in that** said output (25) on the board of the robot (2) resets to zero once the measured value has been sent for holding.

**13.** System (1), as claimed in any of Claims 7 to 12, **characterised in that** the oscillator unit (19) sets the oscillation speed of the at least one output (23) of analog-digital converter unit (18).

**14.** System (1), as claimed in any of Claims 7 to 13, **characterised in that** the outputs interface (20) includes optocouplers for isolating the digital value from the least one output (23) of the analog-digital converter unit (18).

**15.** System (1), as claimed in Claim 1, **characterised in that** it includes a support plate (15) for housing the elements which form the measuring means (5 to 13) and the control means (17 to 20), and a protective housing (16) attached to said support plate (15).

**16.** System (1), as claimed in Claim 15, **characterised in that** the support plate (15) is fixed to a stanchion.

**17.** System (1), as claimed in any of the previous claims, **characterised in that** it includes an internal connection which connects the control means (17 to 20) with the transducer device (12) of the measuring means.

**18.** System (1), as claimed in any of the preceding claims, **characterised in that** it includes a plurality of external connections which include the connection with the power-supply voltage, connection with the separate common terminal for activation of the outputs interface (20) of the control means, the connection with the at least one digital output (23) of the control means corresponding to the measured value, and connection with the digital input (25) of the control means for holding the measured value.

**19.** System (1), as claimed in Claim 18, **characterised in that** Advantageously, the external connections are grouped on a single connector.

**20.** System (1), as claimed in of the preceding claims, **characterised in that** it is situated in a zone accessible to the field of work of the robot (2) and close to the electrode milling unit (3).

**21.** Method for measuring and correcting electrode wear in resistance welding guns, especially in guns mounted on robots (2), applied to the system (1) of the invention, as claimed in Claims 1 to 20, **characterised in that** it consists in:
a) Bringing the robot (2) towards the feeler arm (5) of the measuring means of the system (1).
b) Moving the fixed electrode of the gun, in an ascending path, until it is situated beneath the feeler arm (5).
c) Moving the feeler arm (5) to an intermediate position in order to measure the physical magnitude of the wear of the electrode.
d) Converting said physical measurement into an analog signal by means of the transducer device (12) of the measuring means.
e) Converting said analog signal into a digital signal by means of the analog-digital converter (18) of the control means.
f) Calculating the position of the upper edge of the electrode by means of the data processing means on the basis of the digital value provided.
g) Comparing said position of the upper edge of the electrode with a standard value calculated upon start-up of the robot (2).
h) Calculating the correction of the position of the preset origin of coordinates of the robot (2).
i) Obtaining the new value of the origin of coordinates of the robot (2).
j) Giving the robot (2) the order to implement the welding path using the new value of the origin of coordinates.

**21.** Method, as claimed in Claim 20, **characterised in that** the measuring and correcting of the wear of the electrode is carried out at the moment of initial start-up of the robot (2).

**22.** Method, as claimed in Claim 20, **characterised in that** the measuring and correcting of the wear of the electrode is carried out after an electrode milling operation.

**23.** Method, as claimed in Claim 20, **characterised in that** the measuring and correcting of the wear of the electrode is carried out after a change of electrodes.
